# EUROPEAN PATENT APPLICATION

(11) **EP 4 231 222 A1**
(43) Date of publication of application: **23.08.2023**
(21) Application number: 22203805.1
(22) Date of filing: 26.10.2022
(51) Int. Cl.: G06Q 30/015, G06Q 30/02

(54) **INFORMATION PROCESSING PROGRAM, INFORMATION PROCESSING METHOD, AND INFORMATION PROCESSING APPARATUS**

(30) Priority: 22.02.2022 JP 2022025801
(71) Applicant: FUJITSU LIMITED, Kawasaki-shi, Kanagawa 211-8588 (JP)
(72) Inventor: Kohata, Shun, Kawasaki-shi, Kanagawa, 211-8588 (JP)
(74) Representative: Hoffmann Eitle

(57) **Abstract**

An information processing program causes a computer(10) to execute a process, the process including, identifying relationships between a plurality of customers and a sales clerk by analyzing a video in which an inside of a store is captured,(S102) identifying customers who received customer services from the sales clerk among the plurality of customers based on the identified relationships between the sales clerk and the plurality of customers,(S106) classifying each of the customers into a certain group such that the customers who received the services from the sales clerk belong to different groups,(S107) and associating the classified group with behaviors of the customers who belong to the group.(S108)

## Description

### FIELD

The embodiments discussed herein are related to an information processing program, an information processing method, and an information processing apparatus.

### BACKGROUND

Various efforts are being made to improve a conversion rate by analyzing what is called a purchase behavior, that is, a behavior that a person who has visited a retail store or the like performs when purchasing a product. For example, if, in a store that sells clothes, a person who compares products less than five times is likely to purchase a product and a person who compares products more than five times is likely to leave without purchasing a product, it may be possible to improve a conversion rate by leading a customer to try on clothes less than five times at the time of serving the customer.

Patent Document 1: Japanese Laid-open Patent Publication No. 2009-48430

### SUMMARY

According to an aspect of an embodiment, an information processing program causes a computer to execute a process, the process including, identifying relationships between a plurality of customers and a sales clerk by analyzing a video in which an inside of a store is captured, identifying customers who received customer services from the sales clerk among the plurality of customers based on the identified relationships between the sales clerk and the plurality of customers, classifying each of the customers into a certain group such that the customers who received the services from the sales clerk belong to different groups, and associating the classified group with behaviors of the customers who belong to the group.

### BRIEF DESCRIPTION OF DRAWINGS

FIG. 1 is a diagram illustrating a configuration example of an information processing system according to a first embodiment;
FIG. 2 is a diagram illustrating a configuration example of an information processing apparatus 10 according to the first embodiment;
FIG. 3 is a diagram illustrating an example of information that is stored in a camera installation databased (DB) 14 according to the first embodiment;
FIG. 4 is a diagram illustrating an example of information that is stored in a product DB 15 according to the first embodiment;
FIG. 5 is a diagram illustrating an example of information that is stored in a person DB 16 according to the first embodiment;
FIG. 6 is a diagram for explaining customer tracking;
FIG. 7 is a diagram illustrating an example of extraction and tracking of a person from an in-store image according to the first embodiment;
FIG. 8 is a diagram illustrating an example of skeleton information;
FIG. 9 is a diagram for explaining determination of a posture of a whole body;
FIG. 10 is a diagram for explaining detection of a motion of each of parts;
FIG. 11 is a diagram illustrating an example of designation of an ROI according to the first embodiment;
FIG. 12 is a diagram illustrating an example of a purchase psychological process.
FIG. 13 is a diagram for explaining identification of a resultant behavior type according to the first embodiment;
FIG. 14 is a diagram illustrating an example of determination of movement of a tracked person to outside of an area according to the first embodiment;
FIG. 15 is a diagram illustrating an example of determination of purchase or leave of the tracked person according to the first embodiment;
FIG. 16 is a diagram illustrating an example of determination of a group based on a distance between persons;
FIG. 17 is a diagram illustrating an example of determination of a sales clerk or a customer according to the first embodiment;
FIG. 18 is a diagram illustrating an example of identification of a customer service behavior according to the first embodiment;
FIG. 19 is a diagram illustrating an example of application of a penalty at the time of determination of the group according to the first embodiment;
FIG. 20 is a flowchart illustrating the flow of a purchase/leave determination process according to the first embodiment; and
FIG. 21 is a diagram for explaining a hardware configuration example.

### DESCRIPTION OF EMBODIMENT(S)

However, it is not easy to analyze a purchase behavior of a person while various persons perform various behaviors in a store.

Accordingly, it is an object in one aspect of an embodiment of the present invention to provide an information processing program, an information processing method, and an information processing apparatus capable of accurately analyzing a purchase behavior of a person.

Embodiments of an information processing program, an information processing method, and an information processing apparatus will be described in detail below based on the drawings. The present embodiments are not limited by the embodiments below. In addition, the embodiments may be combined appropriately as long as no contradiction is derived.

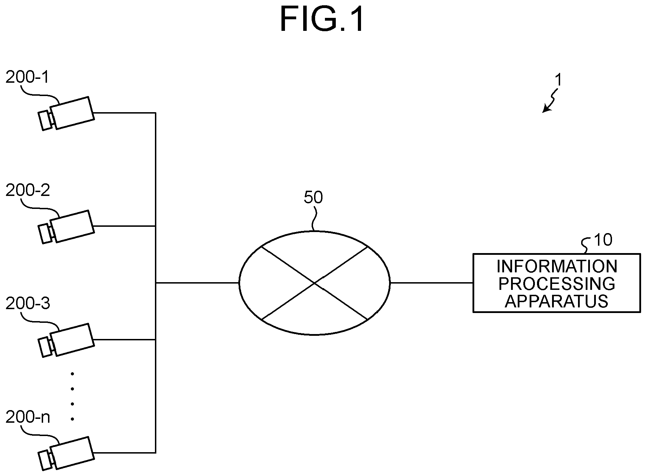

First, an information processing system for carrying out one embodiment will be described below. FIG. 1 is a diagram illustrating a configuration example of an information processing system according to a first embodiment. As illustrated in FIG. 1, an information processing system 1 is a system in which an information processing apparatus 10 and camera devices 200-1 to 200-n (n is an arbitrary integer: hereinafter, the camera devices will be collectively referred to as a "camera device 200") are communicably connected to one another via a network 50.

As the network 50, for example, various kinds of communication networks, such as the Internet, used inside a store, such as a retail store, may be adopted regardless of whether the network is wired or wireless. Further, the network 50 may be configured with an intranet and the Internet via a network device, such as a gateway, or a different device (not illustrated), instead of a single network. Meanwhile, a phrase of "inside of a store", such as a retail store, is not limited to an indoor area, but may include an outside area on the ground at the store, such as a retail store.

The information processing apparatus 10 is, for example, an information processor, such as a desktop personal computer (PC), a notebook PC, or a server computer, which is installed inside of a store, such as a retail store, and used by a store staff, an administrator, or the like. Alternatively, the information processing apparatus 10 may be a cloud computing apparatus that is managed by a service provider who provides a cloud computing service.

The information processing apparatus 10 receives, from the camera device 200, a plurality of images in which a predetermined imaging range, such as each of sales floors or a cashier area, inside of the store, such as a retail store is captured by the camera device 200. Meanwhile the plurality of images are, in a precise sense, a series of frames of a video, that is, a moving image, captured by the camera device 200.

Further, the information processing apparatus 10 extracts a person who stays in the store from the video captured by the camera device 200 and tracks the extracted person, by using an existing object detection technology. Furthermore, the information processing apparatus 10 generates skeleton information on the person who is tracked (hereinafter, the person may simply be referred to as a "tracked person") by using the existing skeleton detection technology, estimates a posture and a motion of the tracked person by using an existing posture estimation technology or the like, and identifies a behavior of the tracked person.

Moreover, the information processing apparatus 10 determines whether the extracted person is a sales clerk or a customer (hereinafter, the sales clerk and the customer may collectively be referred to as a "person") by using a machine learning model. Furthermore, the information processing apparatus 10 identifies a customer who has received a service from a sales clerk on the basis of a relationship between the sales clerk and the customer.

Moreover, the information processing apparatus 10 determines a group of customers by using a customer service history of the sales clerk. The determination is based on, for example, the characteristics that "a sales clerk does not generally serve a plurality of customers in the same group", and, the information processing apparatus 10 determines that a plurality of customers who are served by the sales clerk belong to different groups, for example.

Furthermore, the information processing apparatus 10 identifies, for each group of customers, a first behavior type that is led by behaviors performed by the tracked person, among a plurality of behavior types that define transition of behaviors since entrance of the customer as the tracked person into the store until purchase of a product by the customer in the store. Details of the process of behaviors and identification of the resultant first behavior type will be described later; however, a person in the store may perform various behaviors, such as entrance into the store, looking at a product, picking up a product, comparison, or purchase, and a behavior that is classified into a certain type in association with a process will be referred to as the behavior type. Moreover, the information processing apparatus 10 identifies, for each group of customers, the first behavior type that is led by a customer through various behaviors.

Furthermore, the information processing apparatus 10 determines, for each group of customers, whether the tracked person has moved to the outside of a predetermined area, for example, to a cashier area. Moreover, if the information processing apparatus 10 determines that the tracked person has moved to the outside of the area, the information processing apparatus 10 determines, for each group of customers, whether the tracked person has purchased a product or has left without purchasing a product, on the basis of the first behavior type.

In other words, the information processing apparatus 10 identifies, from the video, behaviors of a plurality of customers who belong to a certain group in the store. Then, the information processing apparatus 10 identifies the first behavior type that is led by behaviors of each of the customers who belong to a certain group, among a plurality of behavior types that define transition of behaviors since entrance into the store until purchase of a product in the store. Subsequently, the information processing apparatus 10 generates information on purchase of a product by using the first behavior type, and associates the group and the information on the purchase of the product with each other.

While the information processing apparatus 10 is illustrated as a single computer in FIG. 1, it may be possible to adopt a distributed computing system that includes a plurality of computers.

The camera device 200 is, for example, a monitoring camera that is installed in each of sales floors and a cashier area inside the store, such as a retail store. A video that is captured by the camera device 200 is transmitted to the information processing apparatus 10. Further, each of products and sales floors captured by the camera device 200 is assigned with location information, such as a coordinate, for identifying each of the products and the sales floors, and, for example, the information processing apparatus 10 is able to identify each of the products and the service areas from the video that is received from the camera device 200.

### Functional configuration of information processing apparatus 10

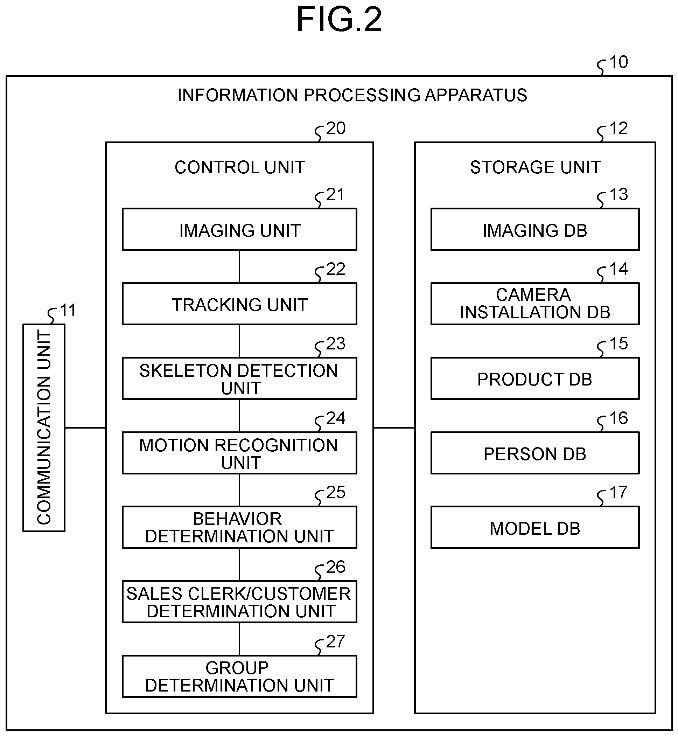

A functional configuration of the information processing apparatus 10 will be described below. FIG. 2 is a diagram illustrating a configuration example of the information processing apparatus 10 according to the first embodiment. As illustrated in FIG. 2, the information processing apparatus 10 includes a communication unit 11, a storage unit 12, and a control unit 20.

The communication unit 11 is a processing unit that controls communication with a different apparatus, such as the camera device 200, and is, for example, a communication interface, such as a network interface card.

The storage unit 12 has a function to store therein various kinds of data and a program to be executed by the control unit 20, and is implemented by, for example, a storage device, such as a memory or a hard disk. The storage unit 12 stores therein an imaging DB 13, a camera installation DB 14, a product DB 15, a person DB 16, a model DB 17, and the like. Meanwhile, DB is an abbreviation of a database.

The imaging DB 13 stores therein a plurality of captured images that are a series of frames captured by the camera device 200. Further, in the imaging DB 13, location information, such as a coordinate, for identifying each of products, regions of sales floors, and extracted persons in each of the captured images may be stored in association with each of the captured images. Furthermore, the imaging DB 13 stores therein the skeleton information on a person who is extracted and identified from a captured image. Generation of the skeleton information will be described later.

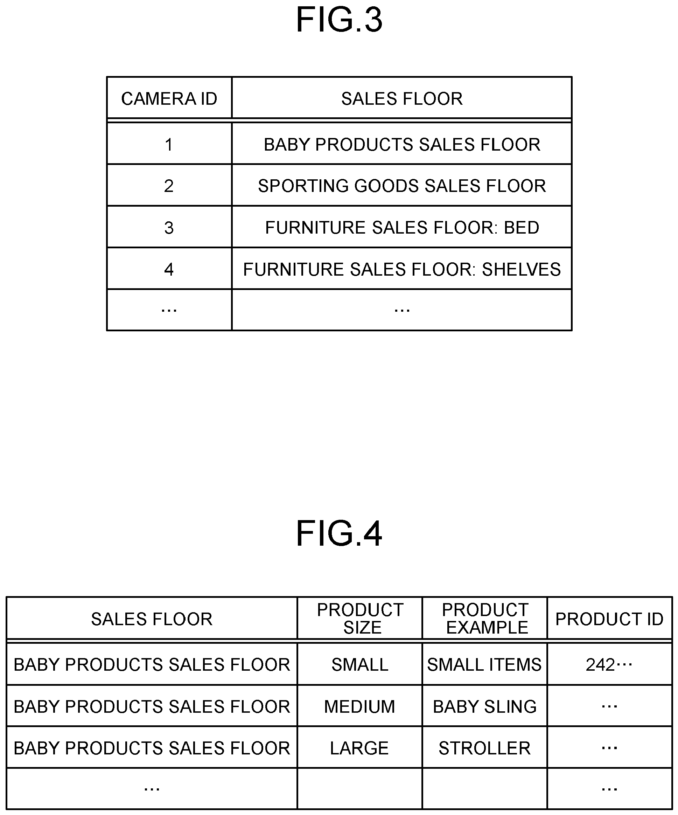

The camera installation DB 14 stores therein information for identifying a place in which each of the camera devices 200 is installed. The information stored in this example may be set in advance by an administrator or the like. FIG. 3 is a diagram illustrating an example of the information that is stored in the camera installation DB 14 according to the first embodiment. As illustrated in FIG. 3, the camera installation DB 14 stores therein pieces of information, such as "camera ID and sales floor", in an associated manner. Information for identifying a camera is set in the "camera ID" stored in this example, and information for identifying a sales floor in which the camera is installed is set in the "sales floor". In the example illustrated in FIG. 3, a case is illustrated in which a camera with a camera ID of 1 is installed in a baby products sales floor, and a camera with a camera ID of 2 is installed in a sporting goods sales floor.

The product DB 15 stores therein information on a product that is provided in each of the sales floors. The information stored in this example may be set in advance by an administrator or the like. FIG. 4 is a diagram illustrating an example of the information that is stored in the product DB 15 according to the first embodiment. As illustrated in FIG. 4, the product DB 15 stores therein pieces of information, such as "sales floor, product size, product example, and product ID", in an associated manner. Information for identifying a sales floor is set in the "sales floor" stored in this example, information on a size of a product is set in the "product size", one example of a corresponding product is set in "product example", and information for identifying a product is set in the "product ID". In the example illustrated in FIG. 4, it is indicated that small items corresponding to products with small product sizes in the baby products sales floor are assigned with a product ID of "242...". Further, in the product DB 15, location information, such as a coordinate, for identifying a sales floor of each of products or for identifying a product may be stored. The information processing apparatus 10 is able to identify a sales floor of each of the products or a product from a video received from the camera device 200, on the basis of the location information.

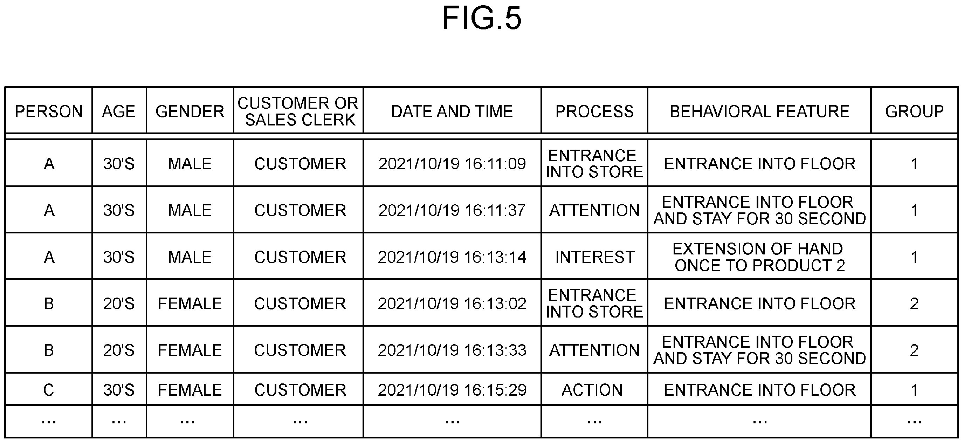

The person DB 16 stores therein information on the tracked person, such as a customer or a sales clerk, who stays in the store. The information stored in this example is generated and set by the information processing apparatus 10 on the basis of a video or information received from the camera device 200. FIG. 5 is a diagram illustrating an example of the information that is stored in the person DB 16 according to the first embodiment. As illustrated in FIG. 5, the person DB 16 stores therein pieces of information, such as "person, age, gender, sales clerk or customer, date and time, process, behavioral feature, and group", in an associated manner. An identifier that uniquely indicates the tracked person is set in the "person" stored in this example, for example. Further, information indicating an age, gender, and whether a customer or a sales clerk is stored in the "age", the "gender", and "customer or sales clerk", with respect to a person who is identified by the information processing apparatus 10 on the basis of a video, information, or the like that is received from the camera device 200. Furthermore, a date and time at which the information processing apparatus 10 identifies the behavior type of the tracked person, a process of the identified behavior type, and a behavioral feature that is determined based on the identified behavior type are set in the "date and time", the "process", and the "behavioral feature". Moreover, an identifier that uniquely indicates a group to which a customer belongs is set in the "group", for example. For example, in FIG. 5, it is indicated that persons A and C are determined as persons who belong to and are grouped together in the same group that is indicated as a group 1. Furthermore, the "group" illustrated in FIG. 5 is one example, and it may be possible to store information on the "group" and the "person" in an associated manner and manage groups between the persons in a different DB from the person DB 16, for example.

The model DB 17 stores therein information on a machine learning model for determining whether the person who is extracted from the video captured by the camera device 200 is a sales clerk or a customer, and a model parameter for constructing the machine learning model. The machine learning model, that is, a sales clerk/customer determination model, is generated through machine learning by using a partial image of the person who is extracted from the video captured by the camera device 200 as a feature value and by using a sales clerk or a customer as a correct answer label, for example.

Furthermore, the model DB 17 stores therein information on a machine learning model for detecting a person who has left without purchasing a product (hereinafter, the person may be referred to as a "leaving person"), and a model parameter for constructing the machine learning model. The machine learning model, that is, a leaving person detection model, is generated through machine learning by using behavioral features of a product purchaser and a leaving person as feature values and by using a purchaser and a leaving person as a correct answer label.

Meanwhile, the sales clerk/customer determination model and the leaving person detection model may be generated by the information processing apparatus 10 or may be generated by training by a different information processing apparatus. Furthermore, the information stored in the storage unit 12 as described above is one example, and the storage unit 12 may store therein various kinds of information in addition to the information as described above.

The control unit 20 is a processing unit that controls the entire information processing apparatus 10, and is, for example, a processor or the like. The control unit 20 includes an imaging unit 21, a tracking unit 22, a skeleton detection unit 23, a motion recognition unit 24, a behavior determination unit 25, a sales clerk/customer determination unit 26, and a group determination unit 27. Meanwhile, each of the processing units is one example of an electronic circuit that is included in the processor or one example of a process that is performed by the processor.

The imaging unit 21 is a processing unit that captures an image. For example, the imaging unit 21 receives image data captured by the camera device 200 and stores the image data in the imaging DB 13.

The tracking unit 22 is a processing unit that acquires each piece of image data that is captured before a person who has entered a store leaves the store. Specifically, the tracking unit 22 extracts image data in which a person appears from a plurality of pieces of image data, that is, a plurality of frames, which are captured by the camera device 200, and identifies the same person among the frames.

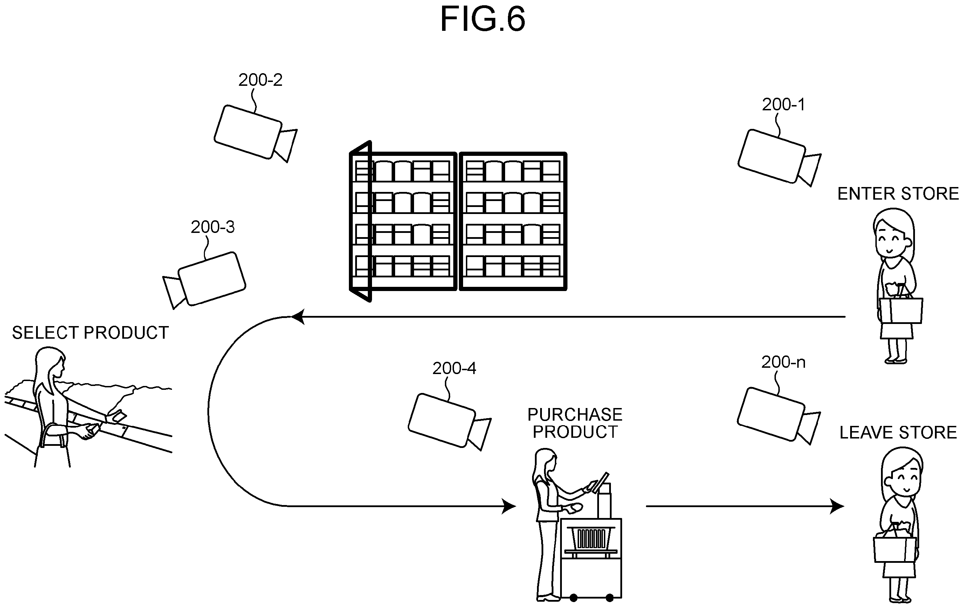

For example, the tracking unit 22 tracks a certain person since entrance into a store until leave from the store, and acquires each piece of image data of the certain person who is captured in the store. FIG. 6 is a diagram for explaining customer tracking. As illustrated in FIG. 6, the tracking unit 22 extracts persons from a plurality of pieces of image data captured by the camera devices 200 that are installed in various places, such as an entrance of the store, each of sales floors, a cashier area, and an exit of the store, in the store, identifies the same person from among the extracted persons, and tracks each of the persons.

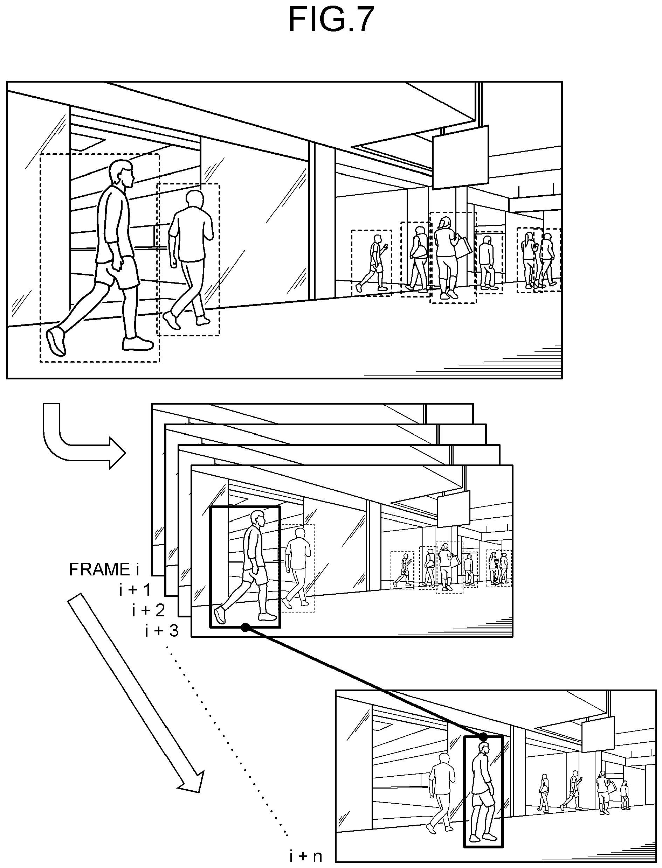

FIG. 7 is a diagram illustrating an example of extraction and tracking of a person from an in-store image according to the first embodiment. As illustrated in FIG. 7, the tracking unit 22 extracts a person from the in-store image by using an existing detection algorithm, such as YOU Only Look Once (YOLO), Single Shot Multibox Detector (SSD), or Region Based Convolutional Neural Networks (RCNN), for example. The in-store image is each piece of image data captured by the camera device 200, and, as illustrated in FIG. 7, the extracted person is indicated by a bounding box (BBOX) that is a rectangle surrounding a corresponding area on the image.

Furthermore, as illustrated in an upper part in FIG. 7, it is naturally possible to extract a plurality of persons from the in-store image. Therefore, as illustrated in a lower part in FIG. 7, the tracking unit 22 identifies the same person among the frames on the basis of a similarity of the BBOX of the person among the plurality of pieces of image data, that is, the plurality of frames, for example. To identify the same person, an existing tracking algorithm, such as Tracking Learning Detection (TLD) or Kernelized Correlation Filters (KCF), may be used, for example.

The skeleton detection unit 23 acquires the skeleton information on the person who appears in the image data. Specifically, the skeleton detection unit 23 performs skeleton detection on a person with respect to the image data in which each of the persons extracted by the tracking unit 22 appears.

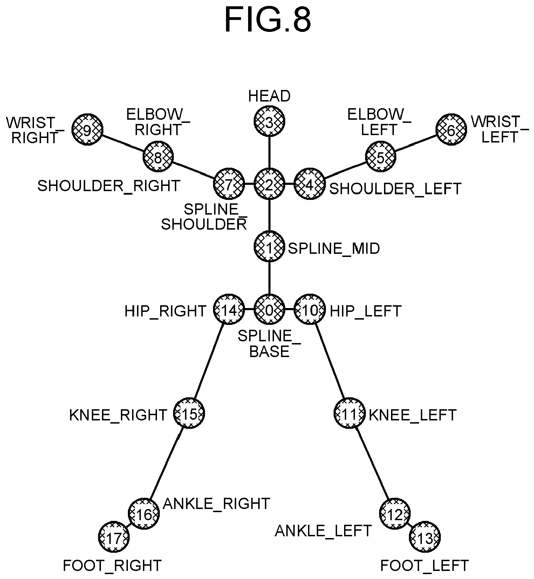

For example, the skeleton detection unit 23 acquires the skeleton information by inputting the image data of the extracted person, that is, the BBOX image representing the extracted person, to a trained machine learning model that is constructed by using an existing algorithm, such as DeepPose or OpenPose. FIG. 8 is a diagram illustrating an example of the skeleton information. As the skeleton information, 18 pieces of definition information (with the numbers 0 to 17) in each of which a joint identified by a well-known skeleton model is assigned with a number may be used. For example, a right shoulder joint (SHOULDER RIGHT) is assigned with the number 7, a left elbow joint (ELBOW_LEFT) is assigned with the number 5, a left knee joint (KNEE_LEFT) is assigned with the number 11, and a right hip joint (HIP_RIGHT) is assigned with the number 14. Therefore, it is possible to acquire coordinate information on 18 skeletons as illustrated in FIG. 8 from the image data, and, for example, "X coordinate = X7, Y coordinate = Y7, and Z coordinate = Z7" is acquired as a position of the right shoulder joint with the number 7. Meanwhile, for example, the Z axis may be defined as a distance direction from the imaging apparatus to a target, the Y axis may be defined as a height direction perpendicular to the Z axis, and the X axis may be defined as a horizontal direction.

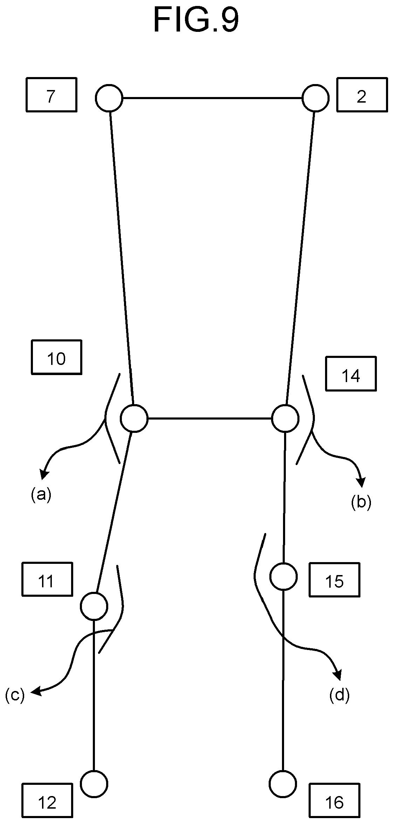

Furthermore, the skeleton detection unit 23 may determine a posture of the whole body, such as standing, walking, squatting, sitting, or sleeping, by using a machine learning model that is trained for skeleton patterns in advance. For example, the skeleton detection unit 23 may be able to determine the closest posture of the whole body by using a machine learning model that is trained by using Multilayer Perceptron for an angle between some joints in the skeleton information as illustrated in FIG. 8 or in a fine play view. FIG. 9 is a diagram for explaining determination of a posture of the whole body. As illustrated in FIG. 9, the skeleton detection unit 23 is able to detect the posture of the whole body by acquiring an angle (a) between a joint of "HIP_LEFT" with the number 10 and a joint of "KNEE_LEFT" with the number 11, an angle (b) between a joint of "HIP_RIGHT" with the number 14 and a joint of "KNEE_RIGHT" with the number 15, an angle of a joint of "KNEE_LEFT" with the number 11, and an angle (d) of a joint of "KNEE_RIGHT" with the number 15.

Furthermore, the skeleton detection unit 23 is able to detect a motion of each of parts by determining a posture of the part on the basis of a three-dimensional (3D) joint posture of the body. Specifically, the skeleton detection unit 23 is able to convert a two-dimensional (2D) joint coordinate to a 3D joint coordinate by using an existing algorithm, such as a 3D-baseline method.

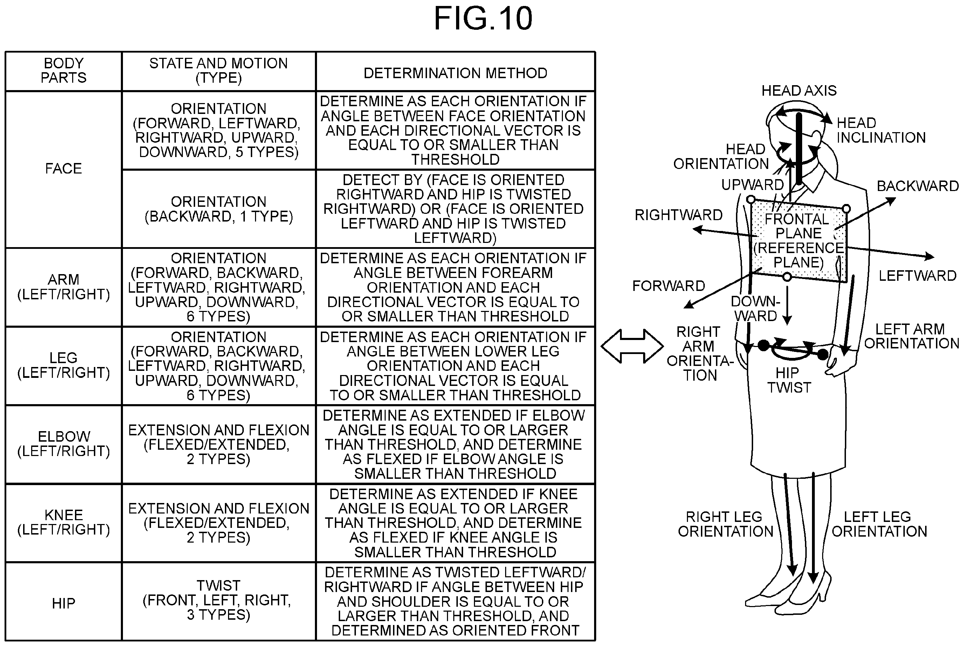

FIG. 10 is a diagram for explaining detection of a motion of each of the parts. As illustrated in FIG. 10, the skeleton detection unit 23 is able to detect, with respect to a part "face", whether the face is oriented forward, leftward, backward, upward, or downward (five types), by determining whether an angle between a face orientation and each directional vector is equal to or smaller than a threshold. Meanwhile, with respect to the face orientation, the skeleton detection unit 23 identifies the orientation by a vector that is defined such that "a start point is a midpoint between both ears and an end point is a nose". Furthermore, the skeleton detection unit 23 is able to detect whether the face is oriented backward by determining whether "the face is oriented rightward and a hip is twisted rightward" or "the face is oriented leftward and the hip is twisted leftward".

With respect to a part "arm", the skeleton detection unit 23 is able to detect whether left and right arms are oriented in any direction from among forward, backward, leftward, rightward, upward, and downward directions (six types) by determining whether an angle between forearm orientation and each directional vector is equal to or smaller than a threshold. Meanwhile, the skeleton detection unit 23 is able to detect the arm orientation by a vector that is defined such that "a start point is an elbow and an end point is a wrist".

With respect to a part "leg", the skeleton detection unit 23 is able to detect whether left and right legs are oriented in any direction from among forward, backward, leftward, rightward, upward, and downward directions (six types) by determining whether an angle between a lower leg orientation and each directional vector is equal to or smaller than a threshold. Meanwhile, the skeleton detection unit 23 is able to detect the lower leg orientation by a vector that is defined such that "a start point is a knee and an end point is an ankle".

With respect to a part "elbow", the skeleton detection unit 23 is able to detect that the elbow is extended if an angle of the elbow is equal to or larger than a threshold and the elbow is flexed if the angle is smaller than the threshold (two types). Meanwhile, the skeleton detection unit 23 is able to detect the angle of the elbow by an angle between a vector A that is defined such that "a start point is an elbow and an end point is a shoulder" and a vector B that is defined such that "a start point is an elbow and an end point is a wrist".

With respect to a part "knee", the skeleton detection unit 23 is able to detect that the knee is extended if an angle of the knee is equal to or larger than a threshold and the knee is flexed if the angle is smaller than the threshold (two types). Meanwhile, the skeleton detection unit 23 is able to detect the angle of the knee by an angle between a vector A that is defined such that "a start point is a knee and an end point is an ankle" and a vector B that is defined such that "a start point is a knee and an end point is a hip".

With respect to a part "hip", the skeleton detection unit 23 is able to detect left twist and right twist (two types) by determining whether an angle between the hip and the shoulder is equal to or smaller than a threshold, and is able to detect that the hip is oriented forward if the angle is smaller than the threshold. Meanwhile, the skeleton detection unit 23 is able to detect the angle between the hip and the shoulder from a rotation angle about an axial vector C that is defined such that "a start point is a midpoint of both hips and an end point is a midpoint of both shoulders", with respect to each of a vector A that is defined such that "a start point is a left shoulder and an end point is a right shoulder" and a vector B that is defined such that "a start point is a left hip (hip (L)) and an end point is a right hip (hip (R))".

Referring back to explanation of FIG. 2, the motion recognition unit 24 is a processing unit that recognizes a motion of the person on the basis of a detection result of the skeleton information obtained by the skeleton detection unit 23. Specifically, the motion recognition unit 24 identifies a behavior including at least one motion on the basis of transition of skeleton information that is recognized for each of successive frames.

For example, if a skeleton representing a face looking at the front is continuously detected by determination of each of the parts and a skeleton representing standing is continuously detected by determination on the posture of the whole body among several frames, the motion recognition unit 24 recognizes a motion of "looking at the front for a certain time". Further, if a skeleton in which a change of the posture of the whole body is smaller than a predetermined value is continuously detected among several frames, the motion recognition unit 24 recognizes a motion of "not moved".

Furthermore, if a skeleton in which the angle of the elbow is changed by a predetermined threshold or more is detected among several frames, the motion recognition unit 24 recognizes a motion of "moving one hand forward" or a motion of "extending one arm", and, if a skeleton in which the angle of the elbow is changed by the threshold or more and thereafter the angle reaches less than the threshold is detected among several frames, the motion recognition unit 24 recognizes a motion of "flexing one hand". Moreover, if a skeleton in which the angle of the elbow is changed by the threshold or more and thereafter the angle reaches less than the threshold is detected, and thereafter, the angle is continued among several frames, the motion recognition unit 24 recognizes a motion of "looking at one hand".

Furthermore, if a skeleton in which an angle of a wrist is continuously changed is detected among several frames, the motion recognition unit 24 recognizes a motion of "frequently moving the coordinate of the wrist during a certain time period". If a skeleton in which the angle of the wrist is continuously changed and the angle of the elbow is continuously changed is detected among several frames, the motion recognition unit 24 recognizes a motion of "frequently changing the coordinate of the elbow and the coordinate of the wrist during a certain time period". If a skeleton in which the angle of the wrist, the angle of the elbow, and the orientation of the whole body are continuously changed is detected among several frames, the motion recognition unit 24 recognizes a motion of "frequently moving the body orientation and whole body motion during a certain time period".

Moreover, the motion recognition unit 24 identifies a product and a sales floor in image data in which a person, a product, and a sales floor of the product appear, from an imaging area of each of the camera devices 200 and the coordinates of each of products in the imaging area and a sales floor of each of the products.

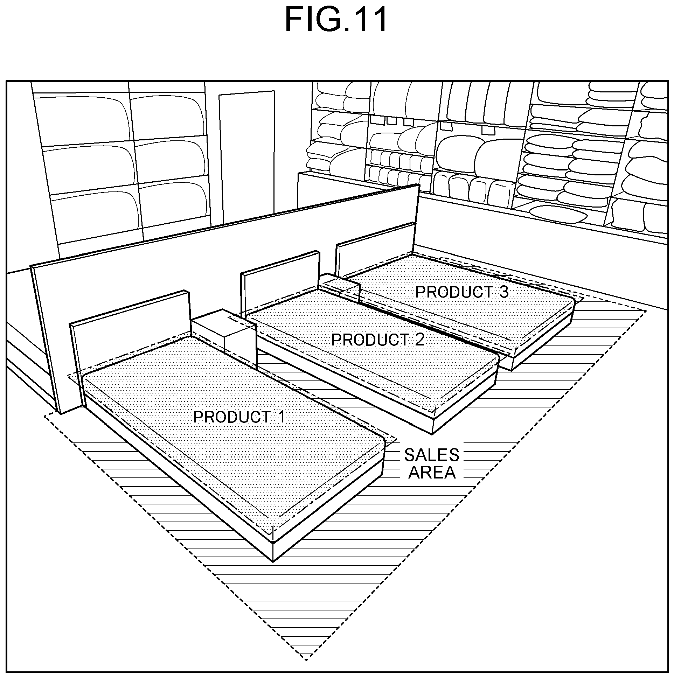

FIG. 11 is a diagram illustrating an example of designation of an ROI according to the first embodiment. As illustrated in FIG. 11, by designating, in advance, a region (region of interest: ROI) of each of products and a sales floor in the imaging area of the camera device 200, the motion recognition unit 24 is able to identify the products and the sales floor from the image data. Further, the motion recognition unit 24 is able to identify a purchase behavior of the tracked person, such as entrance into the sales floor, stay in the floor, extension of a hand to a product 1, or sitting/sleeping on a product 3, from a correlation between the ROI in each piece of image data and a behavior of the tracked person.

Furthermore, the motion recognition unit 24 identifies a first behavior type that is led by behaviors of the tracked person among a plurality of behavior types that define transition of processes of behaviors from entrance into the store until purchase of a product in the store. The behavior type will be described in detail below.

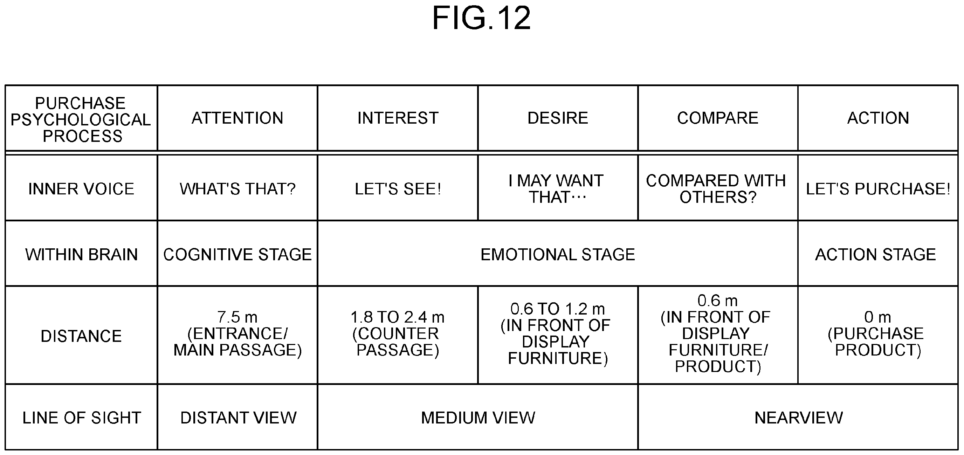

FIG. 12 is a diagram illustrating an example of a purchase psychological process. FIG. 12 is a table that summarizes a customer's purchase psychological process that is what is called AIDeCA. Explanation will be given with a specific example. For example, if a customer A visits a store and finds a banner or a poster in a sales floor, the purchase psychological process transitions to "Attention". Then, if the customer A finds a poster that introduces a product X that the customer A likes, the purchase psychological process transitions to "Interest". Further, the customer A promptly picks up the product X and checks details and a price of the product X. At this time, the purchase psychological process transitions to "Desire". Furthermore, if the customer A recalls a product Y that is a product similar to the product X and that the customer A purchased the other day, and if the customer A compares the product X with the product Y, the purchase psychological process transitions to "Compare". Then, as a result of the comparison, if the customer A is satisfied with the product X and adds the product X to a basket, the purchase psychological process transitions to "Action". The purchase psychological process illustrated in FIG. 12 is only one example; however, in this manner, the customer behaves in accordance with the purchase psychological process as illustrated in FIG. 12, and reaches a certain action before leaving the store. The motion recognition unit 24 adopts a type of the resultant behavior as the first behavior type, identifies a behavior that the customer has performed, and identifies the purchase behavior process corresponding to the resultant behavior.

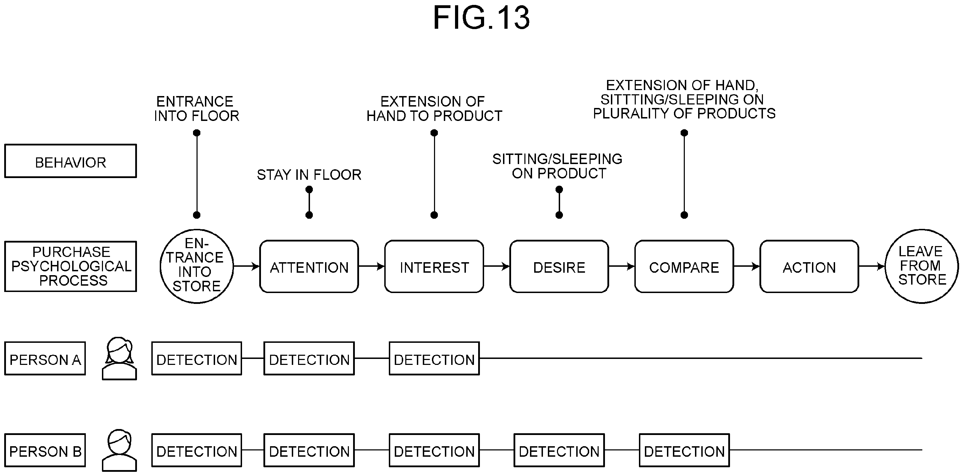

FIG. 13 is a diagram for explaining identification of a resultant behavior type according to the first embodiment. The motion recognition unit 24 detects each of behaviors of the tracked person and identifies a type of a resultant behavior and the purchase psychological process.

In the example illustrated in FIG. 13, it is indicated that the motion recognition unit 24 identifies and detects, with respect to a person A, a behavior of entering into a certain floor, a behavior of staying in the floor for a while, and a behavior of extending a hand to a certain product in the floor. In this case, the resultant behavior type of the person A is, as illustrated in FIG. 13, "extension of hand to a product", and the resultant purchase psychological process is "Interest" corresponding to "extension of hand to a product". Similarly, the resultant behavior type a person B is, as illustrated in FIG. 13, "extension of hand and sitting and sleeping on a plurality of products", and the resultant purchase psychological process is "Compare". Meanwhile, each of the behavior types corresponding to the purchase psychological process illustrated in FIG. 13 is only one example, and embodiments are not limited to this example.

Meanwhile, in the example illustrated in in FIG. 13, a behavior corresponding to leave from the store is not detected with respect to both of the persons A and B, and therefore, it is indicated that the persons A and B are still staying in the floor. Therefore, for example, the information processing apparatus 10 continues to track the persons A and B until detecting behaviors corresponding to leave from the store, and identifies the resultant behavior type and the purchase psychological process. Furthermore, in the example illustrated in FIG. 13, the purchase psychological process of each of the persons A and B is sequentially detected and indicated from the left, but a part of the purchase psychological process may be skipped during detection. For example, if a person enters the floor, immediately finds a desired product, and tries on the product, there may be a case in which the purchase psychological process of "Attention" and "Interest" and corresponding behaviors are not detected.

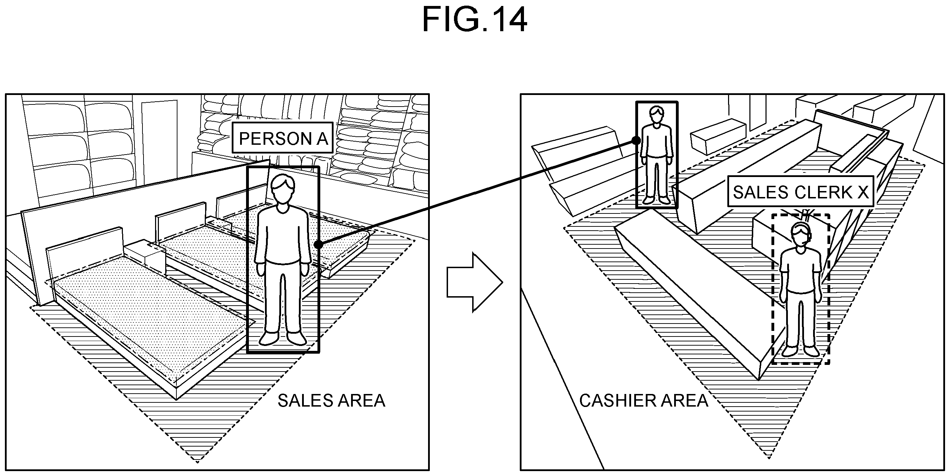

Referring back to explanation of FIG. 2, the behavior determination unit 25 determines whether the tracked person has moved to the outside of a predetermined area. Here, for example, the predetermined area is each of sales floors, and movement to the outside of the predetermined area is movement to a cashier area. However, the outside of the predetermined area may be a different area, such as an exit area or an area outside the store. FIG. 14 is a diagram illustrating an example of determination of movement of the tracked person to the outside of the area according to the first embodiment.

As illustrated in FIG. 14, for example, the behavior determination unit 25 determines whether a person A who is identified in a sales floor has left the sales floor and moved to a cashier area. More specifically, if it is determined that a person who is identified in the cashier area is the same person as the person A who is identified in the sales floor, the behavior determination unit 25 determines that the person A has moved to the outside of the area. Furthermore, in this case, it may be possible to set a time limit, and if it is determined that the person A is the same person as the person who is identified in the cashier area within 10 minutes since the person A has left the sales floor, it may be possible to determine that the person A has moved to the outside of the area, for example.

Meanwhile, to identify the same person, for example, it may be possible to construct, by deep learning, a machine learning model that inputs a BBOX image of a person and outputs a feature value vector of the person indicated by the BBOX, and determine identity of the person from similarity evaluation on the feature value.

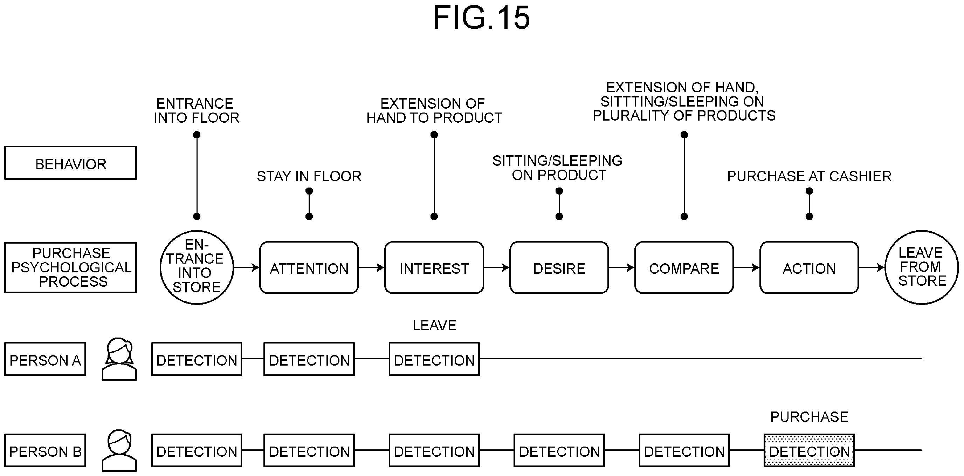

Further, if it is determined that the tracked person has moved to the outside of the area, the behavior determination unit 25 identifies whether the tracked person has purchased a product or left without purchasing a product. FIG. 15 is a diagram illustrating an example of determination of purchase or leave of the tracked person according to the first embodiment. The example illustrated in FIG. 15 is chronologically continued from the example illustrated in FIG. 13.

As illustrated in FIG. 15, for example, if it is determined that the person A has moved to the outside of the area, the resultant behavior type of the person A is "extension of a hand to a product" that corresponds to the purchase psychological process of "Interest", and therefore, the behavior determination unit 25 identifies that the person A has left without purchasing the product. In contrast, for example, if it is determined that the person B has moved to the outside of the area, the resultant behavior type of the person A is "purchase at a cashier" that corresponds to the purchase psychological process of "Action", and therefore, the behavior determination unit 25 identifies that the person B has purchased the product.

Meanwhile, the behavior determination unit 25 may identify that the person has purchased the product if it is simply determined that the person who has identified in the sales floor has moved to the cashier area. In contrast, if it is not determined that the person has moved to the cashier area or if it is not determined that the person has moved to the cashier area within a predetermined time since leave from the sales floor, the behavior determination unit 25 may identify that the person has left without purchasing the product.

As described above, it is possible to identify the purchase behavior of the customer, analyze the purchase behavior, and use the purchase behavior to improve the conversion rate or the like. However, a customer who visits the store includes a group customer, such as a married couple, a couple, or a family, which consists of a plurality of persons, and in some cases, it may be difficult to fully perform analysis only by using an individual purchase behavior. More specifically, for example, in a case where a person A in a group customer tries on a product and hands over the product to a person B in the same group and the person B purchases the product, if an analysis is performed based on an individual purchase behavior, it is determined that the person A has been interested in the product but left without purchasing the product. Further, it is determined that the person B has purchased a certain product without picking up the product. In this manner, in the case in which a plurality of persons cooperate with each other, in some cases, it may be difficult to accurately analyze a purchase behavior of a person.

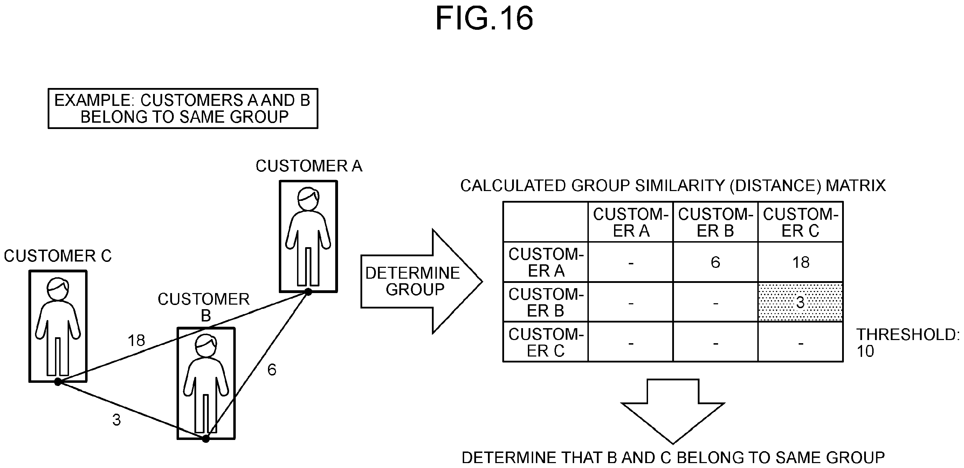

To cope with this, it may be possible to determine a group of persons based on a distance between the persons; however, in some cases, it may be difficult to accurately perform determination based on the distance between the persons. FIG. 16 is a diagram illustrating an example of determination of a group based on a distance between persons. FIG. 16 is a diagram illustrating an example of determination of a group based on a distance between persons. In the determination of the group, for example, the group is determined by adopting, as a distance between persons, a distance between centers of bases of BBOXes of persons who are extracted from a captured image that is captured by the camera device 200. Further, the distance between the persons is calculated as a group similarity, and, for example, it is determined that a plurality of customers who are present within a distance smaller than a predefined threshold belong to the same group.

FIG. 16 illustrates an example in which three persons, that is, customers A and B who belong to the same group and a single customer C, are extracted from a captured image. Further, if it is assumed that the group similarity that is the distance between the persons is calculated as illustrated in a left part in FIG. 16, and, if a threshold of the group similarity is set to 10, a combination of the customers A and B and a combination of the customers B and C, for each of which the group similarity is smaller than 10, is determined as the same group. In this manner, the determination that the combination of the customers B and C is the same group is erroneous determination, and, in some cases, it may be difficult to accurately perform determination if the group determination on persons is performed simply based on the distance between the persons. Furthermore, for example, if it is crowded or if a shield, such as a product shelf, is present, in some cases, an error may occur in the determination based on the distance between the persons, and it may be difficult to accurately perform determination.

To cope with this, in the present embodiment, a group of customers is determined by using a customer service history of a sales clerk. This is a determination method in which, based on the characteristics that, for example, "a sales clerk does not generally serve a plurality of persons in the same group", determination is made by applying a penalty to a group similarity because a plurality of customers who receives services from the sales clerk are highly likely to belong to different groups.

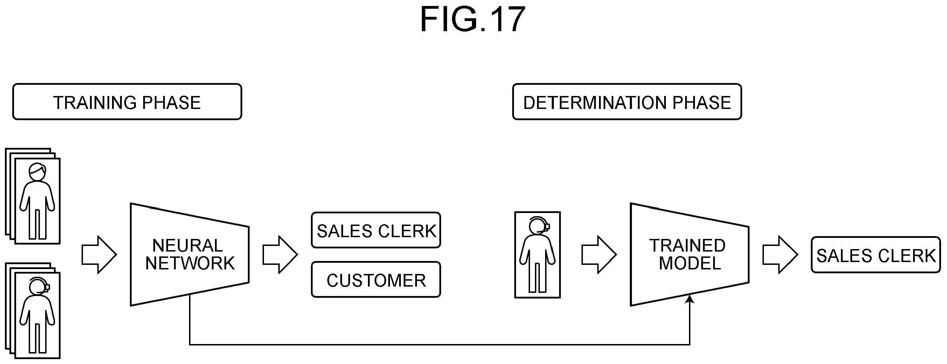

To implement the determination method as described above, referring back to FIG. 2, the sales clerk/customer determination unit 26 determines whether a person extracted from a captured image that is captured by the camera device 200 is a sales clerk or a customer, identifies a customer service behavior of the sales clerk, and generates a customer service history of the sales clerk. Then, the group determination unit 27 determines a group of customers by using the customer service history of the sales clerk. This method will be described in detail below with reference to FIG. 17 to 19.

FIG. 17 is a diagram illustrating an example of determination of a sales clerk or a customer according to the first embodiment. The determination of a sales clerk or a customer is performed by using a sales clerk/customer determination model that is a machine learning model. First, as illustrated in a left part in FIG. 17, in a training phase, the information processing apparatus 10 trains and generates the sales clerk/customer determination model by using a partial image of a person who is extracted from a video captured by the camera device 200 as a feature value and by using a sales clerk or a customer as a correct answer label. The partial image of the person may be an image in the BBOX that is a rectangle surrounding an area of the person. Further, a neural network (NN) may be used in the sales clerk/customer determination model, for example.

Subsequently, as illustrated in a right part in FIG. 17, in a determination phase, the information processing apparatus 10 inputs the partial image of the person who is extracted from the video captured by the camera device 200 into the sales clerk/customer determination model that is generated in the training phase, and determines whether the person is a sales clerk or a customer. Meanwhile, in the example illustrated in FIG. 17, it is indicated that the person of the input partial image is determined as a sales clerk.

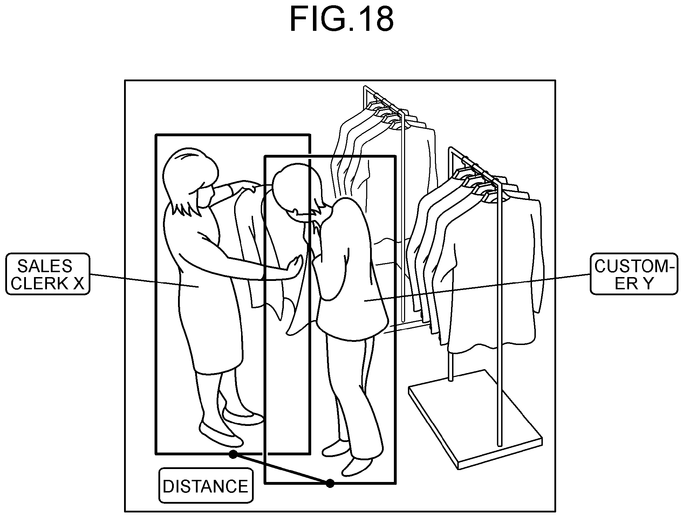

Subsequently, the information processing apparatus 10 identifies a customer service behavior of the sales clerk on the basis of positions of the sales clerk and the customer who are identified by the sales clerk/customer determination model as illustrated in FIG. 17, the skeleton information, or the like. FIG. 18 is a diagram illustrating an example of identification of a customer service behavior according to the first embodiment. As illustrated in FIG. 18, for example, if the sales clerk and the customer are present at a predetermined short distance and the sales clerk and the customer face each other for a certain time period, the information processing apparatus 10 determines that the sales clerk is performing a customer service behavior. Meanwhile, an identification condition for the customer service behavior is not limited to this example, and the customer service behavior may be identified on the basis of a distance between the sales clerk and the customer, various motions of the sales clerk and the customer identified based on the skeleton information or the like, a product held by the sales clerk or the customer, or the like. Furthermore, in this case, Human Object Interaction Detection (HOID) is used. Moreover, the camera device 200 that captures an image of the sales floor is generally fixed, and therefore, it is possible to measure the distance between the sales clerk and the customer by using homography that is an existing technology, for example. Furthermore, the information processing apparatus 10 stores, as the customer service history, the sales clerk who has performed the identified customer service behavior and the person in an associated manner.

The information processing apparatus 10 inputs image data, which is a single frame of a video captured by the camera device 200, to a machine learning model for HOID, and acquires an output result. The output result is, for example, a BBOX of a person, a class name of the person, a BBOX of an object, a class name of the object, a probability value of interaction between the person and the object, a class name of the interaction between the person and the object, or the like.

The information processing apparatus 10 inputs the video in which the inside of the store appears into the machine learning model, and identifies a relationship among a plurality of persons who stay in the store. At this time, the information processing apparatus 10 identifies whether the customer service behavior is performed, as a relationship between the sales clerk and the customer.

Meanwhile, the machine learning model is a model for HOID for which machine learning is performed so as to identify a first class that indicates a first person, first area information that indicates an area in which the person appears, a second class that indicates a second person, second area information in which an object appears, and a relationship between the first class and the second class.

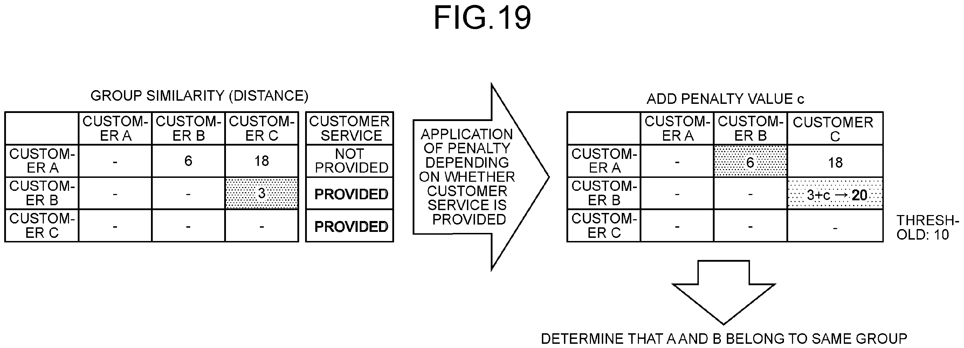

Further, based on the customer service history and the characteristics that, for example, "a sales clerk does not generally serve a plurality of persons in the same group", a penalty is applied to the group similarity because a plurality of customers who receives services from the sales clerk are highly likely to belong to different groups. FIG. 19 is a diagram illustrating an example of application of a penalty at the time of determination of the group according to the first embodiment.

A group similarity illustrated in a left part in FIG. 19 is the same as the group similarity that is calculated based on the distance between the persons as illustrated in the example in FIG. 16. Further, as indicated by "customer service is provided" in FIG. 16, it is assumed that the information processing apparatus 10 determines that the customers B and C have received customer services from the sales clerk on the basis of the customer service history. In this case, the customers B and C are highly likely to belong to different groups; therefore, as illustrated in a right part in FIG. 19, the information processing apparatus 10 adds a penalty value C to the group similarity of the customers B and C. Meanwhile, the penalty value c may be a value equal to or larger than the threshold for the group similarity, for example. Furthermore, it may be possible to set a condition such that a date at which the customer service is performed is the same or a difference in time at which the customer service is performed is within a predetermined time, as a condition under which it is determined that the sales clerk has performed the customer service on the basis of the customer service history. This is because, for example, it is not always the case that a plurality of persons who have received customer services on different days belong to different groups, and therefore, it is possible to set a condition, such as a time at which the customer service is performed, to more accurately determine the group.

Moreover, the information processing apparatus 10 adds the penalty value c and thereafter determines a group of persons. In the example illustrated in FIG. 19, the customers B and C who are determined as belonging to the same group in FIG. 16 exceed the threshold due to the addition of the penalty value c, so that the customers B and C are determined as belonging to different groups. Thus, it is accurately determined that the customers A and B belong to the same group.

### Flow of process

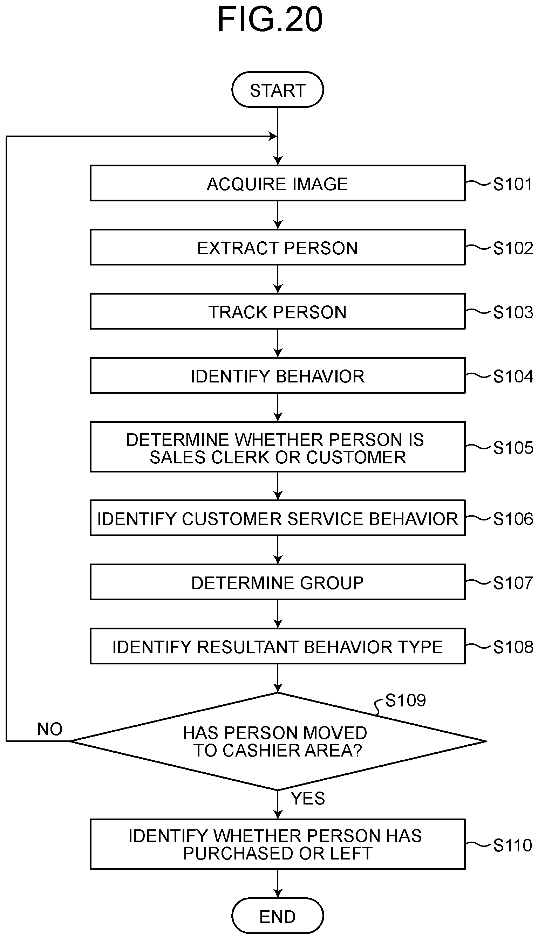

A flow of a purchase/leave determination process that is performed by the information processing apparatus 10 by taking into account a group customer will be described below. FIG. 20 is a flowchart illustrating the flow of the purchase/leave determination process according to the first embodiment. The purchase/leave determination process illustrated in FIG. 20 is a process of identifying, for each group of customers, whether a person who appears in an in-store video purchases a product or leaves without purchasing a product. The purchase/leave determination process illustrated in FIG. 20 may be performed at certain time intervals or every time a captured image is received from the camera device 200, for example.

First, as illustrated in FIG. 20, the information processing apparatus 10 acquires, from the imaging DB 13, a captured image in which a predetermined imaging range, such as the inside of a store, e.g., a retail store, is captured by the camera device 200 (Step S101). Meanwhile, in the purchase/leave determination process illustrated in FIG. 20, the captured image, more precisely, a monitoring video, which is captured by the camera device 200 is processed almost in real time, and therefore, the captured image is transmitted from the camera device 200 and stored in the imaging DB 13 as needed.

Subsequently, the information processing apparatus 10 extracts a person from the captured image acquired at Step S101, by using an existing object detection technology (Step S102). Meanwhile, as for the extraction of a person, it is naturally possible to extract a plurality of persons from the captured image, that is, from a single frame of a video, which is captured by the camera device 200. Therefore, the process from Step S103 is performed for each of the extracted persons.

Subsequently, the information processing apparatus 10 tracks the person extracted at Step S102 (Step S103). As for the tracking of the person, the same person is identified by using an existing technology to persons who are extracted from a plurality of frames of the video that is captured by the camera device 200, and tracks each of the persons. Therefore, as for the flow of the process, in a precise sense, Steps S101 to S103 are repeated to track the persons.

Subsequently, the information processing apparatus 10 identifies a behavior of the tracked person (Step S104). More specifically, for example, with use of an existing technology, the information processing apparatus 10 acquires the skeleton information on the person from the captured images that are successively captured, and identifies a behavior including motions of the person by determining a posture of the person. Furthermore, the information processing apparatus 10 identifies a product and a sales floor in the captured images by using an ROI that is designated in advance for each of products and a sales floor in the imaging area of the camera device 200, and performs determination in combination with the motions of the person, to thereby identify a detailed behavior of the person with respect to the product and the sales floor.

Subsequently, the information processing apparatus 10 determines whether the tracked person is a sales clerk or a customer by using the sales clerk/customer determination model that is a machine learning model as explained above with reference to FIG. 17, for example (Step S105).

Subsequently, the information processing apparatus 10 identifies the customer service behavior of the sales clerk identified at Step S105, as explained above with reference to FIG. 18, for example (Step S106). Furthermore, if the customer service behavior is identified, the information processing apparatus 10 stores, as the customer service history, the sales clerk who has performed the identified customer service behavior and the person in an associated manner.

The information processing apparatus 10 analyzes a video in which the inside of the store is captured, and identifies relationships between a plurality of customers and the sales clerk. Furthermore, the information processing apparatus 10 identifies a customer who has received a service from the sales clerk among the plurality of customers, on the basis of the identified relationships between the sales clerk and the plurality of customers.

Specifically, if it is determined that the video includes a sales clerk and a customer, the information processing apparatus 10 inputs the video to the machine learning model, and identifies a relationship between the sales clerk and the customer. At this time, the information processing apparatus 10 determines, as the relationship, whether the sales clerk has performed the customer service behavior for the customer.

Subsequently, the information processing apparatus 10 adds a penalty on the basis of the customer service history and determines groups of the tracked persons as described above with reference to FIG. 19 (Step S107). Furthermore, as for a plurality of tracked persons who are determined as belonging to the same group, behaviors or the like are determined for each group. In other words, the information processing apparatus 10 classifies each of the customers into a certain group such that the customers who have received customer services from the sales clerk belong to different groups. The information processing apparatus 10 associates a classified group with behaviors of the customers who belong to the classified group.

Subsequently, the information processing apparatus 10 identifies a behavior type that is led by behaviors of the tracked person (Step S108). The behavior type identified here is a behavior type that is associated with the purchase psychological process as explained above with reference to FIG. 13 and FIG. 15.

Subsequently, the information processing apparatus 10 determines whether the tracked person has moved to the cashier area (Step S109). Whether the tracked person has moved to the cashier area is determined by determining whether a person extracted from a captured image of the cashier area is the person who is identified in the sales floor, that is, the same person as the tracked person. Further, as described above, it may be possible to set a time limit, and if it is determined that the person is the same person as the person who is identified in the cashier area within a predetermined time period since the person has left the sales floor, it may be possible to determine that the person has moved to the cashier area, for example. Furthermore, in the example illustrated in FIG. 20, movement to the cashier area is determined, but the area may be a predetermined different area, such as an exit area or an area outside the store. If it is determined that the tracked person has not moved to the cashier area (Step S109: No) the process returns to Step S101 and tracking of the person is continued.

Meanwhile, the determination at Step S109 is performed for each group if a plurality of tracked persons are determined as belonging to the same group at Step S107. In other words, if it is determined that one of the tracked persons who are determined as belonging to the same group has moved to the cashier area, the process goes to the route of Yes at Step S109, and if it is determined that any one of the tracked persons has not moved to the cashier area, the process goes to the route of No at Step S109.

In contrast, if it is determined that the tracked person has moved to the cashier area (Step S109: Yes), the information processing apparatus 10 identifies whether the tracked person has purchased the product or left without purchasing the product (Step S110). In the identification of purchase or left, for example, if the final resultant behavior type that is identified at Step S108 is a behavior corresponding to the purchase psychological process of "Action", the information processing apparatus 10 may identify that the tracked person has purchased the product. Alternatively, if it is simply determined that the tracked person has moved to the cashier area (Step S109: Yes), the information processing apparatus 10 may identify that the tracked person has purchased the product. In contrast, if the final resultant behavior type that is identified at Step S108 is a behavior corresponding to a different purchase psychological process from the purchase psychological process of "Action", the information processing apparatus 10 may identify that the tracked person has left without purchasing the product. Alternatively, if the person is not identified in the cashier area within a predetermined time period since the person has left the sales floor, the information processing apparatus 10 may identify that the tracked person has left without purchasing the product. After execution of Step S110, the purchase/leave determination process illustrated in FIG. 20 is terminated.

Meanwhile, the identification at Step S110 is also performed for each group if a plurality of tracked persons are determined as belonging to the same group at Step S107. In other words, if the final resultant behavior type of one of the tracked persons who are determined as belonging to the same group is a behavior corresponding to the purchase psychological process of "Action" or if it is determined that one of the tracked persons has moved to the cashier area (Step S109: Yes), it may be possible to identify that the person has purchased the product. In this case, it may be possible to determine that the plurality of tracked persons belonging to the same group have, as the group customer, purchased the products. In contrast, if the final resultant behavior types of all of the tracked persons who are determined as belonging to the same group are behaviors corresponding to a different purchase psychological process from the purchase psychological process of "Action", it may be possible to identify that the plurality of tracked persons, as the group customer, have left without purchasing the products.

### Effects

As described above, the information processing apparatus 10 identifies relationships between a plurality of customers and a sales clerk by analyzing a video in which an inside of a store is captured, identifies customers who have received customer services from the sales clerk among the plurality of customers on the basis of the identified relationships between the sales clerk and the plurality of customers, classifies each of the customers into a certain group such that the customers who have received the services from the sales clerk belong to different groups, and associates the classified group with behaviors of the customers who belong to the group.

In this manner, the information processing apparatus 10 is able to accurately analyze the purchase behavior of the person by identifying the customer who has received the service from the sales clerk and the group of customers from the video in which the inside of the store is captured, and analyzing purchase behaviors of the customers in the group as a group customer.

Furthermore, the information processing apparatus 10 identifies behaviors of a plurality of customers who belong to the group in the store by analyzing the video, identifies a first behavior type that is led by a behavior of each of the customers belonging to the group among a plurality of behavior types that define transition of processes of the behaviors that are performed since entrance into the store until purchase of a product in the store, generates information on purchase of the product by using the first behavior type, and associates the group with the information on the purchase of the product.

With this configuration, the information processing apparatus 10 is able to more accurately analyze the purchase behavior of the group customer.

Moreover, the information processing apparatus 10 inputs a first partial image of a first person who is extracted from the video into a machine learning model that is generated through machine learning using a partial image of a person extracted from the video as a feature value and adopting one of the sales clerk and the customer is a correct answer label, and determines whether the first person is the sales clerk or the customer.

With this configuration, the information processing apparatus 10 is able to identify whether the person extracted from the video is a sales clerk or a customer.

Furthermore, the process of identifying the relationships includes identifying relationships between the sales clerk and the customers by inputting the video into a machine learning model if it is determined that the video include the sales clerk and the customers, and determining whether the relationships between the sales clerk and the customers indicate a customer service behavior.

With this configuration, the information processing apparatus 10 is able to more accurately analyze the customer service behavior performed by the sales clerk.

Moreover, the information processing apparatus 10 generates a customer service history of the sales clerk on the basis of the customers who are identified as having received the services from the sales clerk, and the process of classification into a group includes, if the sales clerk has provided a customer service to each of the customers on the basis of the customer service history, a process of determining that the plurality of customers belongs to different groups.

With this configuration, the information processing apparatus 10 is able to identify a group customer.

Furthermore, the process of classification into a group includes a process of adding a penalty value to a group similarity of the plurality of customers who are identified as having received the services from the sales clerk, and determining that, if the group similarity is equal to or larger than a predefined threshold, the plurality of customers belong to different groups.

With this configuration, the information processing apparatus 10 is able to more accurately identify a group customer.

### System

The processing procedures, control procedures, specific names, and information including various kinds of data and parameters illustrated in the above-described document and drawings may be arbitrarily changed unless otherwise specified. In addition, specific examples, distributions, values, or the like explained in the embodiments are mere examples, and may be changed arbitrarily.

Furthermore, specific forms of distribution and integration of components of the apparatuses are not limited to those illustrated in the drawings. In other words, all or part of the components may be functionally or physically distributed or integrated in arbitrary units depending on various loads or use conditions. Moreover, for each processing function performed by each apparatus, all or any part of the processing function may be implemented by a central processing unit (CPU) and a program analyzed and executed by the CPU or may be implemented as hardware by wired logic.

### Hardware

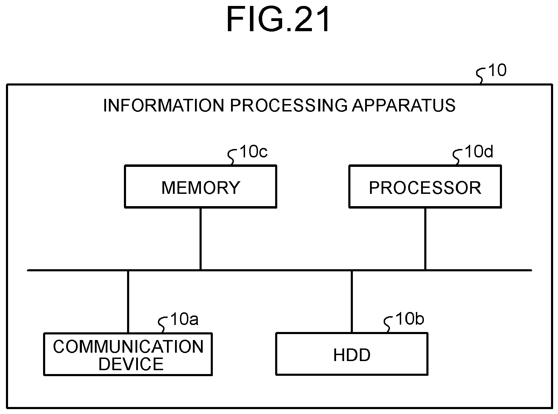

FIG. 21 is a diagram for explaining a hardware configuration example. As illustrated in FIG. 21, the information processing apparatus 10 includes a communication device 10a, a hard disk drive (HDD) 10b, a memory 10c, and a processor 10d. Further, all of the units illustrated in FIG. 12 are connected to one another via a bus or the like.

The communication device 10a is a network interface card or the like and communicates with a different server. The HDD 10b stores therein a program or a DB for implementing the functions as illustrated in FIG. 2.

The processor 10d is a hardware circuit that reads a program that executes the same processes as each of the processing units illustrated in FIG. 2 from the HDD 10b or the like, loads the program onto the memory 10c, and causes processes for implementing each of the functions explained with reference to FIG. 2 or the like to work. In other words, the processes implement the same functions as those of each of the processing units included in the information processing apparatus 10. Specifically, the processor 10d reads a program with the same functions as those of the imaging unit 21, the tracking unit 22, the skeleton detection unit 23, the motion recognition unit 24, the behavior determination unit 25, the sales clerk/customer determination unit 26, the group determination unit 27, and the like from the HDD 10b or the like. Further, the processor 10d executes the processes that implement the same processes as those of the imaging unit 21 and the like.

In this manner, the information processing apparatus 10 functions as an information processing apparatus that performs an operation control process by reading the program that executes the same processes as those of each of the processing units illustrated in FIG. 2 and executing the read program. Furthermore, the information processing apparatus 10 is able to implement the same functions as those of the embodiments as described above by causing a medium reading device to read the program from a recording medium and executing the read program. Meanwhile, the program described in the other embodiment need not always be executed by the information processing apparatus 10. For example, even in a case where a different computer or a different server executes the program or if the different computer and the different server execute the program in a cooperative manner, the present embodiment may be applied in the same manner.

Furthermore, the program that executes the same processes as those of each of the processing units illustrated in FIG. 2 may be distributed via a network, such as the Internet. Moreover, the program may be recorded in a computer readable recording medium, such as a hard disk, a flexible disk (FD), a compact disk-read only memory (CD-ROM), a magneto-optical disk (MO), or a digital versatile disk (DVD), and by causing a computer to read the program from the recording medium.

## Claims

1. An information processing program that causes a computer(10) to execute a process, the process comprising:
identifying relationships between a plurality of customers and a sales clerk by analyzing a video in which an inside of a store is captured;(S102)
identifying customers who received customer services from the sales clerk among the plurality of customers based on the identified relationships between the sales clerk and the plurality of customers;(S106)
classifying each of the customers into a certain group such that the customers who received the services from the sales clerk belong to different groups;(S107) and
associating the classified group with behaviors of the customers who belong to the group.(S108)

2. The information processing program according to claim 1, the process further including:
identifying behaviors of a plurality of customers who belong to the group in the store by analyzing the video;(S104)
identifying a first behavior type that is led by a behavior of each of the customers belonging to the group among a plurality of behavior types that define transition of processes of the behaviors that are performed since entrance into the store until purchase of a product in the store;(S108)
generating information on purchase of the product by using the first behavior type; and
associating the group with the information on the purchase of the product.

3. The information processing program according to claim 1, the process further including:
inputting a first partial image of a first person who is extracted from the video into a machine learning model that is generated through machine learning using a partial image of a person extracted from the video as a feature value and adopting one of the sales clerk and the customer as a correct answer label; and
determining whether the first person is one of the sales clerk and the customer.(S105)

4. The information processing program according to claim 3, wherein
the identifying the relationships includes
identifying relationships between the sales clerk and the customers by inputting the video into a machine learning model if it is determined that the video includes the sales clerk and the customers; and
determining whether the relationships between the sales clerk and the customers indicate a customer service behavior.(S106)

5. The information processing program according to claim 1, the process further including:
generating a customer service history of the sales clerk based on the customers who are identified as having received the services from the sales clerk; wherein
the classifying into a group includes, if the sales clerk provided a customer service to each of the customers based on the customer service history, determining that the plurality of customers belong to different groups.

6. The information processing program according to claim 1, wherein
the classifying into a group includes
adding a penalty value to a group similarity of the plurality of customers who are identified as having received the services from the sales clerk, and
determining that, if the group similarity is equal to or larger than a predefined threshold, the plurality of customers belong to different groups.(S107)

7. The information processing program according to claim 2, the process further including:
identifying an image area of each of plurality of customers from the video;
identifying a position of a skeleton in a person relative to the product by inputting the image area of each of plurality of customers into a neural networks;
identifying the behaviors of a plurality of customers based on the position of a skeleton in a person relative to the product.

8. An information processing method implemented by a computer(10), the information processing method comprising:
identifying relationships between a plurality of customers and a sales clerk by analyzing a video in which an inside of a store is captured;
identifying customers who received customer services from the sales clerk among the plurality of customers based on the identified relationships between the sales clerk and the plurality of customers;
classifying each of the customers into a certain group such that the customers who received the services from the sales clerk belong to different groups; and
associating the classified group with behaviors of the customers who belong to the group.

9. An information processing apparatus(10) comprising:
a controller(20) configured to execute a process including
identifying relationships between a plurality of customers and a sales clerk by analyzing a video in which an inside of a store is captured;
identifying customers who received customer services from the sales clerk among the plurality of customers based on the identified relationships between the sales clerk and the plurality of customers;
classifying each of the customers into a certain group such that the customers who received the services from the sales clerk belong to different groups; and
associating the classified group with behaviors of the customers who belong to the group.

10. The information processing apparatus(10) according to claim 9, the controller further performs a process including:
identifying behaviors of a plurality of customers who belong to the group in the store by analyzing the video;
identifying a first behavior type that is led by a behavior of each of the customers belonging to the group among a plurality of behavior types that define transition of processes of the behaviors that are performed since entrance into the store until purchase of a product in the store;
generating information on purchase of the product by using the first behavior type; and
associating the group with the information on the purchase of the product.

11. The information processing apparatus(10) according to claim 9, wherein the controller further performs a process including:
inputting a first partial image of a first person who is extracted from the video into a machine learning model that is generated through machine learning using a partial image of a person extracted from the video as a feature value and adopting one of the sales clerk and the customer as a correct answer label; and
determining whether the first person is one of the sales clerk and the customer.

12. The information processing apparatus(10) according to claim 11, wherein the process of identifying the relationships includes
identifying relationships between the sales clerk and the customers by inputting the video into a machine learning model if it is determined that the video includes the sales clerk and the customers; and
determining whether the relationships between the sales clerk and the customers indicate a customer service behavior.

13. The information processing apparatus(10) according to claim 9, the controller further performs a process including:
generating a customer service history of the sales clerk based on the customers who are identified as having received the services from the sales clerk; wherein
the classifying into a group includes, if the sales clerk provided a customer service to each of the customers based on the customer service history, determining that the plurality of customers belong to different groups.

14. The information processing apparatus(10) according to claim 9, wherein the process of classifying into a group includes:
adding a penalty value to a group similarity of the plurality of customers who are identified as having received the services from the sales clerk, and
determining that, if the group similarity is equal to or larger than a predefined threshold, the plurality of customers belong to different groups.
